(19) Europäisches Patentamt
European Patent Office
Office européen des brevets

(11) **EP 4 296 310 A1**

(12) **EUROPEAN PATENT APPLICATION**

(43) Date of publication:
**27.12.2023 Bulletin 2023/52**

(21) Application number: **22180926.2**

(22) Date of filing: **24.06.2022**

(51) International Patent Classification (IPC):
**C08L 1/28** (2006.01)    **C08J 3/05** (2006.01)
**D21H 19/52** (2006.01)

(52) Cooperative Patent Classification (CPC):
(C-Sets available)
**C08J 3/05; C08L 1/286; D21H 17/26;**
C08J 2301/28; C08J 2401/28    (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nouryon Chemicals International B.V.
6824 BM Arnhem (NL)**

(72) Inventors:
• **RUTANEN, Anne, Irmeli
  6824BM Arnhem (NL)**

• **VESANEN, Kimmo, Kalevi
  6824BM Arnhem (NL)**
• **AHTIKARI, Jaana, Mirjami
  6824BM Arnhem (NL)**
• **KANNIAINEN, Marko, Juhani
  6824BM Arnhem (NL)**

(74) Representative: **LKGlobal UK Ltd.
Cambridge House
Henry Street
Bath BA1 1BT (GB)**

(54) **HIGH SOLIDS CONTENT CELLULOSE ETHER SOLUTION**

(57)    The present invention relates to a method for producing a cellulose ether solution, the method comprising the following steps:

a) preparing an aqueous solution comprising at least one low molecular weight cellulose ether having a weight average molecular weight of less than 30kDa; and

b) dissolving at least one high molecular weight cellulose ether having a weight average molecular weight of at least 30kDa into the solution of step a), wherein the at least one high molecular weight cellulose ether is added as a solid (preferably as a powder) to the solution of step a),

wherein the amount of low and high molecular weight cellulose ether added in steps a) and b), respectively, is such that the total amount of cellulose ether in the solution is at least 18 wt.% (relative to the total weight of the cellulose ether solution).

EP 4 296 310 A1

(52) Cooperative Patent Classification (CPC): (Cont.)

C-Sets
**C08L 1/286, C08K 5/0016, C08L 1/286;
C08L 1/286, C08L 1/286**

**Description**

The present invention relates to a high solids content cellulose ether solution and preparation methods thereof.

**BACKGROUND**

Cellulose ethers, such as carboxymethylcellulose (CMC), are typically delivered to end-users in powder form. However, in practice, the cellulose ether is normally required in the form of an aqueous solution, so the powder generally needs to be dissolved in water prior to use. The dissolution of the powder in water can be cost ineffective for the end-user. If the cellulose ether could be delivered in a pre-dissolved, high solids content form, then that would provide a cost competitive and more sustainable alternative for these end-users.

Due to its ability to impart rheological properties, improve water retention, improve the efficiency of optical brighteners, and provide strength, CMC is a popular additive in the paper and board industry, especially for coating, sizing, and base web manufacturing. In paper and board coating processes, CMC is added as a pre-dissolved solution (typically having 6 to 12 wt. % CMC) into the coating makedown composition, which usually includes inorganic pigments, organic binders, and additives such as dispersants, optical brighteners, crosslinkers, lubricants, and dyes. CMC also can be used as, or to make, a surface treatment, such as a barrier material. Barrier materials containing CMC can provide oil and grease resistance, oxygen resistance, or both. Common film coating technologies used to form barrier layers in the shape of a film include a size press, a metering size press, and various coating technologies. For each of these technologies, viscosity and/or solids content of the polymer solution that is used plays an important role. Not wishing to be bound by any theory, it is believed that uniform barrier layers result from a high enough coat weight, good film hold-out, or both. These properties may be more easily obtained by making a barrier material with CMC solutions of higher concentration. A higher concentration of CMC in solution is frequently achieved by degrading the CMC using various technologies. However, with these technologies the molecular weight of the CMC typically decreases so drastically that the resulting barrier layers do not have very good film hold-out and penetrate into a base web and thus do not provide required barrier properties.

The existing solutions of pre-dissolved CMCs having a low solids concentration generally will not enable formulation of a high solids content coating composition, and typically limit the amount of cellulose ether that can be used in the coating composition required for paper coating. Although dry addition of cellulose ethers to a high solids pigment slurry could resolve these issues, mills would need to have handling systems for powders, adequate manpower to add the powder by hand, or a mixing system capable of imparting sufficient shear to disperse the powder throughout the solution.

It is typically a challenge to get higher than 15 wt.% cellulose ether solution solids, particularly CMC solutions, without negatively impacting pumpability of the cellulose ether solution and maintaining performance. This is notably the case for high molecular weight cellulose ethers, as higher molecular weight cellulose ethers generally give rise to more viscous solutions. The low-shear viscosity limit for good pumpability with frequently used centrifugal pumps is considered to be about 5000mPas (measured with Brookfield RV 100) at a typical process (pumping) temperature of about 25-60°C. This substantially reduces the upper concentration limit for high-Mw cellulose ether solutions, as higher concentrations of high-Mw cellulose ether solutions tend to have viscosities well in excess of these operating requirements.

As such, obtaining a high solids content cellulose ether solution containing increased quantities of high molecular weight cellulose ethers (for improved performance) whilst also maintaining low viscosity at low shear (for improved processability) is not a simple task.

Earlier solutions have been proposed to provide stable, concentrated, aqueous CMC suspensions. For example, U.S. Patent No. 4,883,537 describes aqueous CMC solutions having decreased viscosity that include at least 33 weight percent potassium carbonate. However, the high concentration of potassium carbonate required can limit the usefulness of these solutions in applications and makes these compositions less attractive/desirable for high CMC solids content applications

WO 2009/061821 discloses methods of producing low-viscosity cellulose ether compositions using a combination of a very low molecular weight cellulose ether and a plasticizer.

WO 2013/057132 discloses methods of increasing the solids content of CMC in low-viscosity compositions. It was found that these methods made it possible to increase the solids content of CMC solutions to up to about 24 wt.% while maintaining solution pumpability. However, in practice those levels could only be reached with low molecular weight cellulose ethers, which provided limited performance as a coating thickener or as a barrier. Additionally, CMC solutions prepared according to the methods of WO 2013/057132 required the solution to have a pH of 7.5-11, which was found to reduce the shelf life of the CMC solution if the CMC solution contained impurities.

Accordingly, there remains a need to provide a method for preparing low viscosity cellulose ether solutions that have an increased amount of high molecular weight cellulose ethers. If the cellulose ether could be delivered in a ready-made solution with a high solids content, particularly with a high solids contents of high molecular weight cellulose ethers, that would provide an improved product whilst also being a more cost effective and more sustainable alternative for end users.

## DETAILED DESCRIPTION

The present inventors have developed a simple, yet highly effective method for preparing cellulose ether solutions that satisfy this need. Accordingly, in a first aspect, the present disclosure relates to a method for producing a high solids, low viscosity cellulose ether solution, the method comprising the following steps:

a) preparing an aqueous solution comprising at least one low molecular weight cellulose ether having a weight average molecular weight of less than 30kDa; and
b) dissolving at least one high molecular weight cellulose ether having a weight average molecular weight of at least 30kDa into the solution of step a), wherein the at least one high molecular weight cellulose ether is added as a solid (preferably as a powder) to the solution of step a),

wherein the amount of low and high molecular weight cellulose ether added in steps a) and b), respectively, is such that the total amount of cellulose ether in the solution is at least 18 wt.%, preferably at least 20 wt.%, preferably at least 25 wt.%, preferably at least 28 wt.%, and most preferably at least 30 wt.% (in each case, wt.% being relative to the total weight of the cellulose ether solution). In a further optional step, the cellulose ether content (wt.%) in the final cellulose ether solution may be adjusted to a desired value by adding water to the cellulose ether solution.
A surprising finding was that the total amount of the high molecular weight cellulose ether in the cellulose ether solution could be substantially increased whilst unexpectedly maintaining a low viscosity solution ($\leq$5000 mPas) by adding the high molecular weight cellulose ether as a solid, preferably as a powder, to the aqueous solution of the low molecular weight cellulose ether of step a). This new way of combining the two different cellulose ethers results in higher total solids contents of the cellulose ethers whilst also providing a much-improved rheological profile for such high solids content cellulose ether solutions vis-à-vis cellulose ether solutions produced via conventional methods.
The high molecular weight cellulose ether in solid form, preferably in powder form, may contain substantial amounts of residual moisture when in the solid form (e.g., water of hydration or the like). It is preferred if the solid (preferably powder form) high molecular weight cellulose ether has a total water content of less than 60 wt.%, preferably less than 50 wt.%, and more preferably less than 40 wt.% (relative to the total weight of the solid high molecular weight cellulose ether).
The solid (preferably in powder form) high molecular weight cellulose ether used in the above method is preferably substantially dry (i.e., subjected to a drying step prior to its use in step b)). As used herein, a "substantially dry" solid (preferably in powder form) high molecular weight cellulose ether has a total water content of 15 wt.% or less, preferably 10 wt.% or less (in each case, wt.% being relative to the total weight of the substantially dry solid - preferably in powder form - high molecular weight cellulose ether).
The weight average molecular weight of the at least one low molecular weight cellulose ether is preferably less than 20 kDa, more preferably less than 15kDa.
The weight average molecular weight of the at least one high molecular weight cellulose ether may be at least 40 kDa, and may be at least 50kDa, at least 75 kDa, or at least 100kDa.
"Weight average molecular weight" as used herein was determined using a Malvern Omnisec Gel Permeation Chromatography system with multidetector module and Viscotek ALS6000Mx2 (13 $\mu$m, 300*8.0 mm) columns. The column temperature was at 35 °C. The eluent used was 0.1 M aqueous sodium nitrate with 10% (V/V) methanol with flow rate 0.8 ml/min. The single sample injection volume was 100 ul and sample concentration 1 mg/ml. The molar mass was determined as average of three (3) injections each from a separate sample vial. The determinations were calibrated with pullulan standard (Mw 113 kDa, PDI 1.13, Polymer Standards Service). The data was processed with Omnisec 5 -software.
The high and/or low molecular weight cellulose ether may be selected from methylcellulose, ethylcellulose, hydroxyethyl cellulose, hydroxypropyl cellulose, hydroxyethylmethyl cellulose, hydroxypropylmethyl cellulose, hydroxybutylmethyl cellulose, ethylhydroxyethyl cellulose, methylethylhydroxyethyl cellulose, carboxymethyl hydroxyethylcellulose, or carboxymethylcellulose.
Preferably, the high and/or low molecular weight cellulose ether described above is a carboxymethylcellulose (CMC). Most preferably, both the high and low molecular weight cellulose ether described above are a carboxymethylcellulose (CMC).
For the avoidance of doubt, the total amount of cellulose ether in the cellulose ether solution is the weight percentage of cellulose ether in the solution (i.e., wt.% of cellulose ether relative to the total weight of the cellulose ether solution). The total amount of cellulose ether in a cellulose ether solution can be easily determined and easily controlled by persons skilled in the art using routine skills.

Preferably, the amount of low and high molecular weight cellulose ether added in steps a) and b), respectively, is such that total amount of cellulose ether in the cellulose ether solution is at least 20 wt.%, preferably at least 25 wt.%, preferably at least 28 wt.%, and most preferably at least 30 wt.%, such as from about 30-40 wt% (in each case, wt.% being relative to the total weight of the cellulose ether solution). In a preferred embodiment, the amount of low and high molecular weight cellulose ether added in steps a) and b), respectively, is such that the total amount of cellulose ether in the cellulose ether solution is from about 18 to 50 wt.%, preferably from about 20 to 50 wt.%, more preferably from about 20 to 40 wt.%, and more preferably from about 30 to 40 wt. % (each being relative to the total weight of the cellulose ether solution).

Preferably, the amount of low and high molecular weight cellulose ether added in steps a) and b), respectively, is such that the total amount of the low molecular weight cellulose ether in the final solution is at least about 15 wt.%, preferably at least about 18 wt.%, more preferably at least about 20 wt.%, and the total amount of high molecular weight cellulose ether in the final solution is at least 5 wt.%, more preferably at least about 8 wt.%, more preferably at least about 10 wt.%, more preferably at least about 15 wt.% (each being relative to the total weight of the cellulose ether solution).

Preferably, the weight ratio of the low molecular weight cellulose ether to the high molecular weight cellulose ether in the cellulose ether solution (low Mw : high Mw) is from about 3:7 to 9:1, preferably about 1:2 to 5:1, more preferably about 1:2 to 4:1, and most preferably about 1:1 to 4:1.

In a preferred embodiment, the total amount of cellulose ether in the cellulose ether solution is from 20 to 50 wt.%, the amount of the low molecular weight cellulose ether is from about 15 to 45 wt.%, and the amount of the high molecular weight cellulose ether is from about 5 to 35 wt.% (in each case, wt.% being relative to the total weight of the cellulose ether solution). In another preferred embodiment, the total amount of cellulose ether in the cellulose ether solution is from 20 to 40 wt.%, the amount of the low molecular weight cellulose ether is from about 15 to 35 wt.%, and the amount of the high molecular weight cellulose ether is from about 5 to 25 wt.% (in each case, wt.% being relative to the total weight of the cellulose ether solution).

Preferably, the weight average molecular weight of the low molecular weight cellulose ether is less than 20 kDa and the weight average molecular weight of the high molecular weight cellulose ether is greater than 30 kDa. Preferably, the weight average molecular weight of the low molecular weight cellulose ether is less than 15 kDa and the weight average molecular weight of the high molecular weight cellulose ether is greater than 30 kDa.

Preferably, the weight average molecular weight of the low molecular weight cellulose ether is less than 30 kDa and the weight average molecular weight of the high molecular weight cellulose ether is greater than 50 kDa. Preferably, the weight average molecular weight of the low molecular weight cellulose ether is less than 30 kDa and the weight average molecular weight of the high molecular weight cellulose ether is greater than 75 kDa. Preferably, the weight average molecular weight of the low molecular weight cellulose ether is less than 30 kDa and the weight average molecular weight of the high molecular weight cellulose ether is greater than 100 kDa.

Preferably, the weight average molecular weight of the low molecular weight cellulose ether is less than 20 kDa and the weight average molecular weight of the high molecular weight cellulose ether is greater than 50 kDa. Preferably, the weight average molecular weight of the low molecular weight cellulose ether is less than 20 kDa and the weight average molecular weight of the high molecular weight cellulose ether is greater than 75 kDa. Preferably, the weight average molecular weight of the low molecular weight cellulose ether is less than 20 kDa and the weight average molecular weight of the high molecular weight cellulose ether is greater than 100 kDa.

Preferably, the weight average molecular weight of the low molecular weight cellulose ether is less than 15 kDa and the weight average molecular weight of the high molecular weight cellulose ether is greater than 50 kDa. Preferably, the weight average molecular weight of the low molecular weight cellulose ether is less than 15 kDa and the weight average molecular weight of the high molecular weight cellulose ether is greater than 75 kDa. Preferably, the weight average molecular weight of the low molecular weight cellulose ether is less than 15 kDa and the weight average molecular weight of the high molecular weight cellulose ether is greater than 100 kDa.

Cellulose ethers having molecular weights in accordance with the above preferred embodiments are well known in the art. Many suitable cellulose ethers are commercially available. Any suitable method for obtaining such cellulose ethers may be used in conjunction with the above-described method for producing a high solids content cellulose ether solution.

The degree of substitution of the cellulose ethers can also affect the solubility of the solid high Mw cellulose ether in the low Mw cellulose ether solution. In that respect, preferred high average molecular weight cellulose ethers have a degree of substitution (DS) of about 0.4 to about 1.5. The solubility of the high Mw cellulose ether in the low Mw cellulose ether is optimal if the high Mw cellulose ether has a DS within this range. Preferably, the high-Mw cellulose ethers are anionic or amphoteric, more preferably anionic, and have a degree of anionic substitution ("$DS_A$") in the range of from about 0.4 to about 1.5. Preferred cellulose ethers in that respect are high weight average molecular weight CMCs with a $DS_A$ of about 0.4 to about 1.5. The term "degree of substitution" or "DS", as used herein, means the average number of substituted ring sites of the beta-anhydroglucose rings of the cellulose derivative. Similarly, the term "degree of anionic substitution" or "$DS_A$" means the average number of substituted ring sites of the beta-anhydroglucose rings of the cellulose derivative, wherein the substituent is anionic (e.g., a carboxymethyl group). Since there are three hydroxyl groups on each anhydroglucose ring of the cellulose that are available for substitution, the maximum value of DS is 3.0.

It is also preferred if the low Mw cellulose ether also has a DS in the range of about 0.4 to about 1.5. Preferably, the low-Mw cellulose ethers are anionic or amphoteric, more preferably anionic, and have a degree of anionic substitution ("$DS_A$") in the range of from about 0.4 to about 1.5. Preferred cellulose ethers in that respect are low weight average molecular weight CMCs with a $DS_A$ of about 0.4 to about 1.5.

Accordingly, in a more preferred embodiment, the low molecular weight cellulose ether is a CMC having a weight average molecular weight of less than 30 kDa, preferably less than 20 kDa, more preferably less than 15kDa, and the high molecular weight cellulose ether is a CMC having a $DS_A$ of about 0.4 to about 1.5 and a weight average molecular weight of at least 30 kDa, more preferably 50kDa, more preferably at least 75 kDa, more preferably at least 100kDa.

In a more preferred embodiment, the low molecular weight cellulose ether is a CMC having a $DS_A$ of about 0.4 to about 1.5 and a weight average molecular weight of less than 30 kDa, preferably less than 20 kDa, more preferably less than 15kDa, and the high molecular weight cellulose ether is a CMC having a $DS_A$ of about 0.4 to about 1.5 and a weight average molecular weight of at least 30 kDa, more preferably 50kDa, more preferably at least 75 kDa, more preferably at least 100kDa.

Thus, in a preferred embodiment, the method for producing a high solids, low viscosity cellulose ether solution, comprises the following steps:

a) preparing an aqueous solution comprising at least one low molecular weight cellulose ether having a weight average molecular weight of less than 30kDa; and
b) dissolving at least one high molecular weight cellulose ether having a weight average molecular weight of at least 30kDa into the solution of step a), wherein the at least one solid high molecular weight cellulose ether is added as a (preferably substantially dry) solid (preferably in powder form) to the solution of step a),

wherein the amount of low and high molecular weight cellulose ether added in steps a) and b) is such that the total amount of cellulose ether in the solution is from about 20 to 50 wt.%, and the amount of low and high molecular weight cellulose ether added in steps a) and b), respectively, is such that the amount of the low molecular weight cellulose ether in the final solution is at least 15 wt.% and the amount of high molecular weight cellulose ether in the final solution is at least 5 wt.% (in each case, wt.% being relative to the total weight of the cellulose ether solution).

In a further preferred embodiment, the method for producing a high solids, low viscosity cellulose ether solution, comprises the following steps:

a) preparing an aqueous solution comprising at least one low molecular weight carboxymethylcellulose (CMC) having a weight average molecular weight of less than 30kDa; and
b) dissolving at least one high molecular weight CMC having a weight average molecular weight of at least 30kDa into the solution of step a), wherein the at least one high molecular weight cellulose ether is added as a (preferably substantially dry) solid (preferably in powder form) to the solution of step a),

wherein the amount of low and high molecular weight CMC added in steps a) and b) is such that the total amount of CMC in the solution is from about 20 to 50 wt.%, and the amount of low and high molecular weight CMC added in steps a) and b), respectively, is such that the amount of the low molecular weight CMC in the final solution is at least 15 wt.% and the amount of high molecular weight CMC in the final solution is at least 5 wt.% (in each case, wt.% being relative to the total weight of the cellulose ether solution).

In a further preferred embodiment, the method for producing a high solids, low viscosity cellulose ether solution, comprises the following steps:

a) preparing an aqueous solution comprising at least one low molecular weight carboxymethylcellulose (CMC) having a weight average molecular weight of less than 30kDa; and
b) dissolving at least one high molecular weight CMC having a weight average molecular weight of at least 30kDa into the solution of step a), wherein the at least one substantially dry high molecular weight cellulose ether is added as a (preferably substantially dry) solid (preferably in powder form) to the solution of step a),

wherein the amount of low and high molecular weight CMC added in steps a) and b) is such that the total amount of CMC in the solution is from about 20 to 50 wt.%, and the amount of low and high molecular weight CMC added in steps a) and b), respectively, is such that the amount of the low molecular weight CMC in the final solution is at least 15 wt.%

and the amount of high molecular weight CMC in the final solution is at least 5 wt.% (in each case, wt.% being relative to the total weight of the cellulose ether solution), and wherein the weight ratio of the low molecular weight CMC to the high molecular weight CMC in the final solution is from about 3:7 to 9:1, preferably about 1:2 to 5:1, more preferably about 1:2 to 4:1, and most preferably about 1:1 to 4:1..

In a further preferred embodiment, the method for producing a high solids, low viscosity cellulose ether solution, comprises the following steps:

a) preparing an aqueous solution comprising at least one low molecular weight carboxymethylcellulose (CMC) having a weight average molecular weight of less than 30kDa and a $DS_A$ of about 0.4 to about 1.5; and

b) dissolving at least one high molecular weight CMC having a weight average molecular weight of at least 30kDa and a $DS_A$ of about 0.4 to about 1.5 into the solution of step a), wherein the at least one high molecular weight cellulose ether is added as a (preferably substantially dry) solid (preferably in powder form) to the solution of step a),

wherein the amount of low and high molecular weight CMC added in steps a) and b) is such that the total amount of CMC in the solution is from about 20 to 50 wt.%, and the amount of low and high molecular weight CMC added in steps a) and b), respectively, is such that the amount of the low molecular weight CMC in the final solution is at least 15 wt.% and the amount of high molecular weight CMC in the final solution is at least 5 wt.% (in each case, wt.% being relative to the total weight of the cellulose ether solution), and wherein the weight ratio of the low molecular weight CMC to the high molecular weight CMC in the final solution is from about 3:7 to 9:1, preferably about 1:2 to 5:1, more preferably about 1:2 to 4:1, and most preferably about 1:1 to 4:1.

Preferably, the at least one high molecular weight cellulose ether is added as a (preferably substantially dry) solid (preferably in powder form) to the solution of step a) at a temperature of from about 20°C to 70°C, preferably from about 25°C to 65°C, preferably from about 25°C to 60°C (i.e., the solution of step a) is preferably adjusted to a temperature of about 20°C to 70°C, preferably about 25-65°C, preferably about 25-60°C, before addition of the high molecular weight cellulose ether). As such, in a further preferred embodiment, the method for producing a high solids, low viscosity cellulose ether solution, comprises the following steps:

a) preparing an aqueous solution comprising at least one low molecular weight cellulose ether having a weight average molecular weight of less than 30kDa;

b) adjusting the temperature of the solution of step a) to about 20°C to about 70°C, and

c) dissolving at least one high molecular weight cellulose ether having a weight average molecular weight of at least 30kDa into the solution of step b), wherein the at least one high molecular weight cellulose ether is added as a (preferably substantially dry) solid (preferably in powder form) to the solution of step b),

wherein the amount of low and high molecular weight cellulose ethers added in steps a) and c) is such that the total amount of cellulose ether in the solution is at least 18 wt.% (relative to the total weight of the cellulose ether solution).

In a further preferred embodiment, the method for producing a high solids, low viscosity cellulose ether solution, comprises the following steps:

a) preparing an aqueous solution comprising at least one low molecular weight carboxymethylcellulose (CMC) having a weight average molecular weight of less than 30kDa and optionally a $DS_A$ of about 0.4 to about 1.5;

b) adjusting the temperature of the solution of step a) to about 25°C to 65°C, and

c) dissolving at least one high molecular weight CMC having a weight average molecular weight of at least 30kDa, and optionally a $DS_A$ of about 0.4 to about 1.5, into the solution of step b), wherein the at least one high molecular weight cellulose ether is added as a (preferably substantially dry) solid (preferably in powder form) to the solution of step b),

wherein the amount of low and high molecular weight CMC added in steps a) and c) is such that the total amount of CMC in the solution is from about 20 to 50 wt.%, and the amount of low and high molecular weight CMC added in steps a) and b), respectively, is such that the amount of the low molecular weight CMC in the final solution is at least 15 wt.% and the amount of high molecular weight CMC in the final solution is at least 5 wt.% (in each case, wt.% being relative to the total weight of the cellulose ether solution), and wherein the weight ratio of the low molecular weight CMC to the high molecular weight CMC in the final solution is optionally from about 3:7 to 9:1, preferably about 1:2 to 5:1, more preferably about 1:2 to 4:1, and most preferably about 1:1 to 4:1.

The present disclosure, of course, also relates to the cellulose ether solutions produced by the above-described method and preferred embodiments thereof. As explained above, these cellulose ether solutions are characterized in that they contain large amounts (wt.%) of cellulose ether whilst having unexpectedly beneficial rheological properties for such solutions (notably a surprisingly low viscosity). In that respect, in a second aspect the present disclosure relates to a high solids, low viscosity cellulose ether solution comprising:

a) water;
b) at least one low molecular weight cellulose ether having a weight average molecular weight of less than 30kDa; and
c) at least one high molecular weight cellulose ether having a weight average molecular weight of at least 30kDa,

wherein the total amount of cellulose ether in the solution is at least 18 wt.% (relative to the total weight of the cellulose ether solution), and wherein the cellulose ether solution has a viscosity of 5000 mPas or less (Brookfield RV, 100 rpm, 40°C, spindle 6).

In a preferred embodiment, the cellulose ether solution comprises:

a) water;
b) at least one low molecular weight cellulose ether, preferably a CMC, having a weight average molecular weight of less than 30kDa; and
c) at least one high molecular weight cellulose ether, preferably a CMC, having a weight average molecular weight of at least 30kDa,

wherein the total amount of cellulose ether in the solution is at least 20 wt.%, wherein the amount of the low molecular weight cellulose ether in the final solution is at least 15 wt.% and the amount of high molecular weight cellulose ether in the final solution is at least 5 wt.% (in each case, wt.% being relative to the total weight of the cellulose ether solution), and wherein the cellulose ether solution has a viscosity of 5000 mPas or less (Brookfield RV, 100 rpm, 40°C, spindle 6).

In another preferred embodiment, the cellulose ether solution comprises:

a) water;
b) at least one low molecular weight CMC having a weight average molecular weight of less than 30kDa; and
c) at least one high molecular weight CMC having a weight average molecular weight of at least 30kDa,

wherein the total amount of cellulose ether in the solution is from about 20 to 40 wt.%, wherein the amount of the low molecular weight CMC in the final solution is at least 15 wt.% and the amount of high molecular weight CMC in the final solution is at least 5 wt.% (in each case, wt.% being relative to the total weight of the cellulose ether solution), wherein the weight ratio of the low molecular weight CMC to the high molecular weight CMC in the final solution is from about 3:7 to 9:1, preferably about 1:2 to 5:1, more preferably about 1:2 to 4:1, and most preferably about 1:1 to 4:1., and wherein the cellulose ether solution has a viscosity of 5000 mPas or less (Brookfield RV, 100 rpm, 40°C, spindle 6).

In another preferred embodiment, the cellulose ether solution comprises:

a) water;
b) at least one low molecular weight CMC having a weight average molecular weight of less than 30kDa and a $DS_A$ of 0.4 to about 1.5. and
c) at least one high molecular weight CMC having a weight average molecular weight of at least 30kDa and a $DS_A$ of 0.4 to about 1.5.

wherein the total amount of cellulose ether in the solution is from about 20 to 50 wt.%, wherein the amount of the low molecular weight CMC in the final solution is at least 15 wt.% and the amount of high molecular weight CMC in the final solution is at least 5 wt.% (in each case, wt.% being relative to the total weight of the cellulose ether solution), wherein the weight ratio of the low molecular weight CMC to the high molecular weight CMC in the final solution is from about 3:7 to 9:1, preferably about 1:2 to 5:1, more preferably about 1:2 to 4:1, and most preferably about 1:1 to 4:1., and wherein the cellulose ether solution has a viscosity of 5000 mPas or less (Brookfield RV, 100 rpm, 40°C, spindle 6).

Preferably, the cellulose ether solution contains at least 40 wt.% water. In that respect, the cellulose ether solution may contain water in an amount of from about 40 wt.% to 82 wt.%, preferably from about 50 wt.% to 80 wt.%, more preferably from about 60 wt.% to about 70 wt.% (in each case, wt.% being relative to the total weight of the cellulose ether solution).

The cellulose ether solutions produced by the above-described method may also comprise a plasticizer, such as, but not limited to, sorbitol, glycerol, mannitol, and/or xylitol. The plasticizer may be present in any suitable amount, such as from 1-50 wt.% (relative to the total weight of the cellulose ether solution). The high solids content cellulose ether solution may also comprise further additives conventionally used in barrier coating applications, such as crosslinkers, pigments, etc.

The high solids content cellulose ether solution preferably has a pH of about 4.5 to about 7.5. An unexpected finding was that the cellulose ether solution could be produced by the methods described with a pH in this range, which generally improved the shelf-life of the solution, irrespective of whether impurities were present in the solution.

In a third aspect, the present disclosure relates to the use of a high solids content cellulose ether solution as described above as a surface treatment agent, e.g., barrier coating, for paper and board substrates.

In a fourth aspect, the present disclosure relates to a method for treating a surface of a paper or board substrate comprising applying a high solids content cellulose ether solution as described above to the surface of the paper or board substrate.

In a fifth aspect, the present disclosure relates to a surface treated paper or board substrate obtainable by the method of the fourth aspect of the present disclosure.

In a sixth aspect, the present disclosure relates to the use of a high solids content cellulose ether solution as described above as a co-binder and/or thickener.

**Examples**

The following examples provide a detailed method for working the invention. These worked examples are exemplary in nature and not intended to be limitative.

*Example 1*

As noted above, the conventional method for preparing mixtures of two different cellulose ethers is to prepare a solution of each cellulose ether and then mix the two in the required amounts to obtain the required ratio of cellulose ethers. As noted above, however, there is a limit on how much high-Mw cellulose ether can be dissolved before the resulting solution can no longer be suitably processed (i.e., is not pumpable). This limits the total maximum solids content that can be achieved for solutions containing high-Mw cellulose ethers, which in turn hinders the ability to achieve the desired barrier properties of the coating.

To exemplify this problem, two CMCs were selected:

$$CMC1 – Mw <30\ kDa\ (\text{"LMw CMC"})$$

$$CMC2 – Mw >200\ kDa\ (\text{"HMw CMC"})$$

For a solution of CMC1 only, it was found that the maximum total solids that could be achieved was about 35wt.%.

For a solution of CMC2 only, however, it was found that the maximum total solids that could be achieved was about 5wt.% (limited by the high Mw, >200kDa).

To increase the total solids content of a solution comprising CMC2, the inventors aimed to produce a solution wherein the solids content ratio of CMC1 to CMC2 was 80:20. This was achieved by mixing 229 grams of the solution of CMC1 and 400 grams of the solution of CMC2 to arrive at the desired solids content ratio. It was found that the total CMC content that could be achieved for an 80:20 weight ratio (CMC1 :CMC2) by the conventional method (mixing solutions) was about 16 wt.%.

However, by first preparing a -25.5% solution of the low-Mw CMC (i.e., no need for maximum solids) and then mixing (at 600 rpm and at 60 °C) the required amount (22 grams) of high-Mw CMC in a substantially dry powder form (8 wt.% moisture content) into the low-Mw CMC solution to produce the desired 80:20 ratio, it was possible to produce a CMC solution with about double the total CMC content (30 wt.%):

Table 1.

| | Conventional | Inventive |
|---|---|---|
| CMC1 Solution, (CMC1 wt.%) | 35 (max) | 25.5 |
| CMC2 Solution, (CMC2 wt.%) | 5 (max) | -- |
| CMC2 dry material, moisture 8%, (CMC2 wt.%) | -- | 92 |
| | | |
| Weight Ratio CMC1 : CMC2 | 80 : 20 | 80 : 20 |
| Final Solution Content of cellulose ether (wt.%) | 16 (max) | 30 |
| Final Solution Content of HMw cellulose ether (wt.%) | 3.2 (max) | 6.0 |

This demonstrates the substantial improvement provided by the present method in terms of substantially increasing not only the total quantity of cellulose ether, but substantially increasing the total quantity of the high molecular weight cellulose ether in the cellulose ether solution.

The inventive cellulose ether solution would be particularly suitable as a thickener in paper and board coatings.

*Example 2*

A further study was performed to determine whether the relative concentration of the high-Mw CMC could be further increased whilst maintaining the excellent rheological properties of the solution.

In that respect, a second set of CMCs were tested:

CMC3 - Mw <15 kDa ("LMw CMC")

CMC4 - Mw >30-40kDa ("HMw CMC")

For these CMCs, it was found that it was again possible to produce a CMC solution with a high total solids content when following the method disclosed herein. Of note is that it was possible to increase the low to high Mw CMC weight ratio to 1:1 whilst maintaining the high total amount of cellulose ether and excellent rheological profile. To achieve this, a 25.5% solution of the low-Mw CMC (196 grams; 49.98g dry low-Mw CMC) was mixed (60°C, 600rpm) with the required amount of high-Mw CMC (-54grams; 49.68g dry high Mw-CMC) in a substantially dry form (8% moisture content) to produce the desired 1:1 ratio. The resulting CMC solution was adjusted to a final CMC content of 25 wt.% by diluting with water:

Table 2.

|  | Inventive |
|---|---|
| Weight Ratio CMC3 :CMC4 | 1 :1 |
| Final Solution Content of cellulose ether (wt.%) | 25 |
| Final Solution Content of HMw cellulose ether (wt.%) | 12.5 |
| Viscosity (mPas; Brookfield RV, spindle 6, 100 rpm, 40°C) | 3400 |

The inventors were unable to produce an equivalent solution with such a high concentration of the high Mw CMC and low viscosity when using other known processes (including the solution mixing process set out in Example 1); the conventional method (cf. Example 1) reached a maximum total CMC content of 17.8 wt.% (1:1 ratio, low Mw : high Mw).

As such, the inventors have now developed a method for producing cellulose ether solutions containing, to the best of the inventors' knowledge, previously unattainable levels of HMw cellulose ether whilst having rheological properties that make them suitable for use in paper/board coating and barrier applications.

To summarise, the inventors have developed an improved method for preparing solutions of cellulose ethers with a substantially increased total amount of cellulose ether, particularly with respect to the high Mw cellulose ethers, whilst maintaining excellent rheological properties.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment as contemplated herein. It should be understood that various changes may be made in the function and arrangement of elements described in an exemplary embodiment without departing from the scope of the invention as set forth in the appended claims.

The present disclosure may be further described by the following Aspects.

**Aspect 1.** A method for producing a high solids, low viscosity cellulose ether solution, the method comprising the following steps:

a) preparing an aqueous solution comprising at least one low molecular weight cellulose ether having a weight average molecular weight of less than 30kDa; and

b) dissolving at least one high molecular weight cellulose ether having a weight average molecular weight of at least 30kDa into the solution of step a), wherein the at least one high molecular weight cellulose ether is added as a solid (preferably as a powder) to the solution of step a),

wherein the amount of low and high molecular weight cellulose ether added in steps a) and b), respectively, is such that the total amount of cellulose ether in the solution is at least 18 wt.% (relative to the total weight of the cellulose ether solution).

**Aspect 2.** The method of Aspect 1, wherein the amount of low and high molecular weight cellulose ether added in steps a) and b), respectively, is such that the total amount of cellulose ether in the solution is at least 20 wt.%, preferably at least 25 wt.%, preferably at least 28 wt.%, and most preferably at least 30 wt.% (in each case, wt.% being relative to the total weight of the cellulose ether solution).

**Aspect 3.** The method of Aspects 1 or 2, wherein the amount of low and high molecular weight cellulose ether added in steps a) and b), respectively, is such that the total amount of cellulose ether in the cellulose ether solution is from about 18 to 50 wt.%.

**Aspect 4.** The method of any one of Aspects 1-3, wherein the amount of low and high molecular weight cellulose ether added in steps a) and b), respectively, is such that the total amount of cellulose ether in the cellulose ether solution is from about 20 to 40 wt.%.

**Aspect 5.** The method of any one of Aspects 1-4, wherein the amount of low and high molecular weight cellulose ether added in steps a) and b), respectively, is such that the total amount of the low molecular weight cellulose ether in the final solution is at least about 15 wt.% and the total amount of high molecular weight cellulose ether in the final solution is at least 5 wt.% (in each case, wt.% being relative to the total weight of the cellulose ether solution).

**Aspect 6.** The method of any one of Aspects 1-5, wherein the total amount of cellulose ether in the cellulose ether solution is from 20 to 50 wt.%, the amount of the low molecular weight cellulose ether is from about 15 to 45 wt.%, and the amount of the high molecular weight cellulose ether is from about 5 to 35 wt.% (in each case, wt.% being relative to the total weight of the cellulose ether solution).

**Aspect 7.** The method of any one of Aspects 1-6, wherein the weight ratio of the low molecular weight cellulose ether to the high molecular weight cellulose ether in the cellulose ether solution (low Mw : high Mw) is from about 3:7 to 9:1.

**Aspect 8.** The method of any one of Aspects 1-7, wherein the total amount of cellulose ether in the cellulose ether solution is from 20 to 40 wt.%, the amount of the low molecular weight cellulose ether is from about 15 to 35 wt.%, and the amount of the high molecular weight cellulose ether is from about 5 to 25 wt.% (in each case, wt.% being relative to the total weight of the cellulose ether solution).

**Aspect 9.** The method of any one of Aspects 1-8, wherein the weight ratio of the low molecular weight cellulose ether to the high molecular weight cellulose ether in the cellulose ether solution (low Mw : high Mw) is from about 1:2 to 5:1.

**Aspect 10.** The method of any one of Aspects 1-9, wherein the weight ratio of the low molecular weight cellulose ether to the high molecular weight cellulose ether in the cellulose ether solution (low Mw : high Mw) is from about 1:1 to 4:1.

**Aspect 11.** The method of any one of Aspects 1-10, wherein the solid high molecular weight cellulose ether is in a powder form.

**Aspect 12.** The method of any one of Aspects 1-11, wherein the solid high molecular weight cellulose ether is a substantially dry solid having a total water content of 15 wt.% or less (relative to the total weight of the substantially dry solid high molecular weight cellulose ether).

**Aspect 13.** The method of any one of Aspects 1-12, wherein the high and/or low molecular weight cellulose ether is selected from methylcellulose, ethylcellulose, hydroxyethyl cellulose, hydroxypropyl cellulose, hydroxyethylmethyl cellulose, hydroxypropylmethyl cellulose, hydroxybutylmethyl cellulose, ethylhydroxyethyl cellulose, methylethylhydroxyethyl cellulose, carboxymethyl hydroxyethylcellulose, or carboxymethylcellulose

**Aspect 14.** The method of any one of Aspects 1-13, wherein the high and/or low molecular weight cellulose ether is a carboxymethylcellulose.

**Aspect 15.** The method of any one of Aspects 1-14, wherein the high and the low molecular weight cellulose ether are a carboxymethylcellulose.

**Aspect 16.** The method of any one of Aspects 1-15, wherein the weight average molecular weight of the low molecular weight cellulose ether is less than 20 kDa and the weight average molecular weight of the high molecular weight cellulose ether is greater than 30 kDa.

**Aspect 17.** The method of any one of Aspects 1-15, wherein the weight average molecular weight of the low molecular weight cellulose ether is less than 15 kDa and the weight average molecular weight of the high molecular weight cellulose ether is greater than 30 kDa.

**Aspect 18.** The method of any one of Aspects 1-15 wherein the weight average molecular weight of the low molecular weight cellulose ether is less than 30 kDa and the weight average molecular weight of the high molecular weight cellulose ether is greater than 50 kDa.

**Aspect 19.** The method of any one of Aspects 1-15, wherein the weight average molecular weight of the low molecular weight cellulose ether is less than 30 kDa and the weight average molecular weight of the high molecular weight cellulose ether is greater than 75 kDa.

**Aspect 20.** The method of any one of Aspects 1-15, wherein the weight average molecular weight of the low molecular weight cellulose ether is less than 30 kDa and the weight average molecular weight of the high molecular weight cellulose ether is greater than 100 kDa.

**Aspect 21.** The method of any one of Aspects 1-15, wherein the weight average molecular weight of the low molecular weight cellulose ether is less than 20 kDa and the weight average molecular weight of the high molecular weight cellulose ether is greater than 50 kDa.

**Aspect 22.** The method of any one of Aspects 1-15, wherein the weight average molecular weight of the low molecular weight cellulose ether is less than 20 kDa and the weight average molecular weight of the high molecular weight cellulose ether is greater than 75 kDa.

**Aspect 23.** The method of any one of Aspects 1-15, wherein the weight average molecular weight of the low molecular weight cellulose ether is less than 20 kDa and the weight average molecular weight of the high molecular weight cellulose ether is greater than 100 kDa.

**Aspect 24.** The method of any one of Aspects 1-15, wherein the weight average molecular weight of the low molecular weight cellulose ether is less than 15 kDa and the weight average molecular weight of the high molecular weight cellulose ether is greater than 50 kDa.

**Aspect 25.** The method of any one of Aspects 1-15, wherein the weight average molecular weight of the low molecular weight cellulose ether is less than 15 kDa and the weight average molecular weight of the high molecular weight cellulose ether is greater than 75 kDa.

**Aspect 26.** The method of any one of Aspects 1-15, wherein the weight average molecular weight of the low molecular weight cellulose ether is less than 15 kDa and the weight average molecular weight of the high molecular weight cellulose ether is greater than 100 kDa.

**Aspect 27.** The method of any one of Aspects 1-26, wherein the high molecular weight cellulose ether has a degree of substitution (DS) of about 0.4 to about 1.5.

**Aspect 28.** The method of any one of Aspects 1-27, wherein the low molecular weight cellulose ether has a degree of substitution (DS) of about 0.4 to about 1.5.

**Aspect 29.** The method of any one of Aspects 1-28, wherein the low molecular weight cellulose ether has a degree of substitution (DS) of about 0.4 to about 1.5 and wherein the high molecular weight cellulose ether has a degree of substitution (DS) of about 0.4 to about 1.5.

**Aspect 30.** The method of any one of Aspects 1-29, wherein the high molecular weight cellulose ether has a degree of anionic substitution ($DS_A$) of about 0.4 to about 1.5.

**Aspect 31.** The method of any one of Aspects 1-30, wherein the low molecular weight cellulose ether has a degree of anionic substitution ($DS_A$) of about 0.4 to about 1.5.

**Aspect 32.** The method of any one of Aspects 1-31, wherein the low molecular weight cellulose ether has a degree of anionic substitution ($DS_A$) of about 0.4 to about 1.5 and wherein the high molecular weight cellulose ether has a degree of anionic substitution ($DS_A$) of about 0.4 to about 1.5.

**Aspect 33.** The method of any one of Aspects 30-32, wherein the high molecular weight cellulose ether is a CMC and/or wherein the low molecular weight cellulose ether is a CMC.

**Aspect 34.** The method of any one of Aspects 30-33, wherein the high molecular weight cellulose ether is a CMC and wherein the low molecular weight cellulose ether is a CMC.

**Aspect 35.** The method of any one of Aspects 30-34, wherein the high molecular weight cellulose ether is a CMC having a weight average molecular weight of greater than 30 kDa and wherein the low molecular weight cellulose ether is a CMC having a weight average molecular weight of the low molecular weight of less than 20 kDa.

**Aspect 36.** The method of any one of Aspects 1-35, wherein aqueous the solution of step a) is adjusted to a temperature of about 25-60°C before step b).

**Aspect 37.** The method of any one of Aspects 1-36, wherein the cellulose ether solution further comprises a plasticizer.

**Aspect 38.** The method of any one of Aspects 1-37, wherein the pH of the cellulose ether solution is from about 4.5 to about 7.5

**Aspect 39.** A cellulose ether solution obtainable by the method of any one of Aspects 1-38.

**Aspect 40.** A cellulose ether solution comprising:

> a) water;
> b) at least one low molecular weight cellulose ether having a weight average molecular weight of less than 30kDa; and

c) at least one high molecular weight cellulose ether having a weight average molecular weight of at least 30kDa,

wherein the total amount of cellulose ether in the solution is at least 18 wt.% (relative to the total weight of the cellulose ether solution), and wherein the cellulose ether solution has a viscosity of 5000 mPas or less (Brookfield RV, 100 rpm, 40°C, spindle 6).

**Aspect 41.** The cellulose ether solution of Aspect 40, wherein the cellulose ether solution comprises:

a) water;
b) at least one low molecular weight cellulose ether having a weight average molecular weight of less than 30kDa; and
c) at least one high molecular weight cellulose ether having a weight average molecular weight of at least 30kDa,

wherein the total amount of cellulose ether in the solution is at least 20 wt.%, wherein the amount of the low molecular weight cellulose ether in the solution is at least 15 wt.% and the amount of high molecular weight cellulose ether in the solution is at least 5 wt.% (in each case, wt.% being relative to the total weight of the cellulose ether solution), and wherein the cellulose ether solution has a viscosity of 5000 mPas or less (Brookfield RV, 100 rpm, 40°C, spindle 6).

**Aspect 42.** The cellulose ether solution of Aspects 40 or 41, wherein the high and/or low molecular weight cellulose ether is a CMC.

**Aspect 43.** The cellulose ether solution of any one of Aspects 40-42, wherein the high and low molecular weight cellulose ether are a CMC.

**Aspect 44.** The cellulose ether solution of any one of Aspects 40-43, wherein the total amount of cellulose ether in the solution is from about 20 to 40 wt.%, wherein the amount of the low molecular weight cellulose ether in the final solution is at least 15 wt.% and the amount of high molecular weight cellulose ether in the final solution is at least 5 wt.% (in each case, wt.% being relative to the total weight of the cellulose ether solution).

**Aspect 45.** The cellulose ether solution of any one of Aspects 40-44, wherein the weight ratio of the low molecular weight cellulose ether to the high molecular weight cellulose ether in the final solution is from about 3:7 to 9:1.

**Aspect 45.** The cellulose ether solution of any one of Aspects 40-44, wherein the weight ratio of the low molecular weight cellulose ether to the high molecular weight cellulose ether in the final solution is from about 1:2 to 5:1.

**Aspect 46.** The cellulose ether solution of any one of Aspects 40-45, wherein the weight ratio of the low molecular weight cellulose ether to the high molecular weight cellulose ether in the final solution is from about 1:2 to 4:1.

**Aspect 47.** The cellulose ether solution of any one of Aspects 40-46, wherein the weight ratio of the low molecular weight cellulose ether to the high molecular weight cellulose ether in the final solution is from about 1:1 to 4:1.

**Aspect 48.** The cellulose ether solution of any one of Aspects 40-47, wherein the at least one low molecular weight cellulose ether is a CMC having a weight average molecular weight of less than 30kDa and a $DS_A$ of 0.4 to about 1.5.

**Aspect 49.** The cellulose ether solution of any one of Aspects 40-48, wherein the at least one high molecular weight cellulose ether is a CMC having a weight average molecular weight of more than 30kDa and a $DS_A$ of 0.4 to about 1.5.

**Aspect 50.** The cellulose ether solution of any one of Aspects 40-49, wherein the cellulose ether solution contains at least 40 wt.% water.

**Aspect 51.** The cellulose ether solution of any one of Aspects 40-50, wherein the cellulose ether solution further comprises at least one plasticizer.

**Aspect 52.** The cellulose ether solution of Aspect 51, wherein the plasticizer is selected from sorbitol, glycerol, mannitol, and/or xylitol.

**Aspect 53.** The cellulose ether solution of any one of Aspects 40-52, wherein the cellulose ether solution has a pH of about 4.5 to about 7.5.

**Aspect 54.** Use of a high solids content cellulose ether solution according to any one of Aspects 39-53 as a surface treatment agent for paper and board substrates.

**Aspect 55.** Use of a high solids content cellulose ether solution according to any one of Aspects 39-53 as a barrier coating for paper and board substrates.

**Aspect 56.** A method for treating a surface of a paper or board substrate comprising applying a cellulose ether solution according to any one of Aspects 39-53 to the surface of the paper or board substrate.

**Aspect 57.** A surface treated paper or board substrate obtainable by the method of Aspect 56.

**Aspect 58.** Use of a high solids content cellulose ether solution according to any one of Aspects 39-53 as a co-binder and/or thickener.

**Claims**

1. A method for producing a cellulose ether solution, the method comprising the following steps:

a) preparing an aqueous solution comprising at least one low molecular weight cellulose ether having a weight average molecular weight of less than 30kDa; and

b) dissolving at least one high molecular weight cellulose ether having a weight average molecular weight of at least 30kDa into the solution of step a), wherein the at least one high molecular weight cellulose ether is added as a solid to the solution of step a),

wherein the amount of low and high molecular weight cellulose ether added in steps a) and b), respectively, is such that the total amount of cellulose ether in the final solution is at least 18 wt.% (relative to the total weight of the cellulose ether solution).

2. The method of Claim 1, wherein the amount of low and high molecular weight cellulose ether added in steps a) and b), respectively, is such that the total amount of cellulose ether in the solution is at least 20 wt.%.

3. The method of claim 2, wherein the amount of low and high molecular weight cellulose ether added in steps a) and b), respectively, is such that the total amount of the low molecular weight cellulose ether in the final solution is at least about 15 wt.% and the total amount of high molecular weight cellulose ether in the final solution is at least 5 wt.% (in each case, wt.% being relative to the total weight of the cellulose ether solution).

4. The method of any one of Claims 1-3, wherein the weight ratio of the low molecular weight cellulose ether to the high molecular weight cellulose ether in the cellulose ether solution (low Mw : high Mw) is from about 3:7 to about 9:1.

5. The method of any one of Claims 1-4, wherein the high molecular weight cellulose ether and the low molecular weight cellulose ether are a carboxymethylcellulose.

6. The method of any one of Claims 1-5, wherein the weight average molecular weight of the low molecular weight cellulose ether is less than 20 kDa and the weight average molecular weight of the high molecular weight cellulose ether is greater than 30 kDa.

7. The method of any one of Claims 1-6, wherein the low molecular weight cellulose ether has a degree of substitution (DS) of about 0.4 to about 1.5 and wherein the high molecular weight cellulose ether has a degree of substitution (DS) of about 0.4 to about 1.5.

8. A cellulose ether solution comprising:

a) water;
b) at least one low molecular weight cellulose ether having a weight average molecular weight of less than 30kDa; and
c) at least one high molecular weight cellulose ether having a weight average molecular weight of at least 30kDa,

wherein the total amount of cellulose ether in the solution is at least 18 wt.% (relative to the total weight of the cellulose ether solution), and wherein the cellulose ether solution has a viscosity 5000 mPas or less (Brookfield RV, 100 rpm, 40°C, spindle 6).

9. The cellulose ether solution of claim 8, wherein the total amount of cellulose ether in the solution is at least 20 wt.%, wherein the amount of the low molecular weight cellulose ether in the solution is at least 15 wt.%, and wherein the amount of high molecular weight cellulose ether in the solution is at least 5 wt.% (in each case, wt.% being relative to the total weight of the cellulose ether solution).

10. The cellulose ether solution Claims 8 or 9, wherein the high molecular weight cellulose ether and low molecular weight cellulose ether are a CMC.

11. The cellulose ether solution of any one of Claims 8-10, wherein the cellulose ether solution further comprises at least one plasticizer.

12. The cellulose ether solution of any one of Claims 8-11, wherein the cellulose ether solution has a pH of about 4.5 to about 7.5.

13. Use of a high solids content cellulose ether solution according to any one of Claims 8-12 as a surface treatment agent for paper and board substrates, or as a co-binder and/or thickener.

14. A method for treating a surface of a paper or board substrate comprising applying a cellulose ether solution according to any one of Claims 8-12 to the surface of the paper or board substrate.

15. A surface treated paper or board substrate obtainable by the method of Claim 14.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 080 717 A (YOUNG TENG-SHAU [US]) 14 January 1992 (1992-01-14) * column 1, lines 1-5, 45-63 * * column 2, lines 1-20 * * column 3, lines 6-55 * * column 4, lines 29-35 * * examples 1-9 * | 1-15 | INV. C08L1/28 C08J3/05 D21H19/52 |
| A,D | WO 2013/057132 A1 (CP KELCO OY [FI]; MORRISON NEIL ARGO [US] ET AL.) 25 April 2013 (2013-04-25) * paragraphs [0002] – [0004], [0011] – [0012] * * examples 1-5 * | 1-15 | |

| TECHNICAL FIELDS SEARCHED (IPC) |
|---|
| C08L D21H C08J |

The present search report has been drawn up for all claims

| Place of search | Date of completion of the search | Examiner |
|---|---|---|
| Munich | 9 December 2022 | Lartigue, M |

EPO FORM 1503 03.82 (P04C01)

## ANNEX TO THE EUROPEAN SEARCH REPORT
## ON EUROPEAN PATENT APPLICATION NO.

EP 22 18 0926

09-12-2022

| Patent document cited in search report | Publication date | Patent family member(s) | Publication date |
|---|---|---|---|
| US 5080717 A | 14-01-1992 | AU 652020 B2 | 11-08-1994 |
| | | CA 2058326 A1 | 25-07-1992 |
| | | DE 69218269 T2 | 26-06-1997 |
| | | EP 0496269 A2 | 29-07-1992 |
| | | FI 920200 A | 25-07-1992 |
| | | JP 2620832 B2 | 18-06-1997 |
| | | JP H04333696 A | 20-11-1992 |
| | | US 5080717 A | 14-01-1992 |
| WO 2013057132 A1 | 25-04-2013 | BR 112014003890 A2 | 13-06-2017 |
| | | CA 2843613 A1 | 25-04-2013 |
| | | CN 103814049 A | 21-05-2014 |
| | | DE 12783545 T1 | 13-11-2014 |
| | | EP 2768864 A1 | 27-08-2014 |
| | | ES 2509966 T1 | 20-10-2014 |
| | | JP 6401058 B2 | 03-10-2018 |
| | | JP 2014534302 A | 18-12-2014 |
| | | KR 20140077148 A | 23-06-2014 |
| | | MX 342842 B | 13-10-2016 |
| | | PT 2768864 T | 05-11-2018 |
| | | TR 201815761 T4 | 21-11-2018 |
| | | US 2013192492 A1 | 01-08-2013 |
| | | US 2016009871 A1 | 14-01-2016 |
| | | WO 2013057132 A1 | 25-04-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4883537 A
- WO 2009061821 A
- WO 2013057132 A